# EUROPÄISCHE PATENTSCHRIFT

(11) **EP 1 207 999 B1**
(45) Veröffentlichungstag und Bekanntmachung des Hinweises auf die Patenterteilung: **14.04.2004**
(21) Anmeldenummer: 00965799.0
(22) Anmeldetag: 29.08.2000
(51) Int. Cl.: B29D 30/26

(54) **REIFENAUFBAUMASCHINE MIT ANDRÜCKEINHEITEN**
TYRE BUILDING APPARATUS WITH PRESS UNITS
MACHINE DE CONFECTION DE PNEUMATIQUES AVEC UNITES DE PRESSION

(30) Priorität: 03.09.1999 DE 19942220
(43) Veröffentlichungstag der Anmeldung: 29.05.2002
(73) Patentinhaber: ThyssenKrupp Elastomertechnik GmbH, 21079 Hamburg (DE)
(72) Erfinder: FUNCK, Hans-Christoph, 28844 Weyhe (DE); WEDEKIND, Werner, 21376 Salzhausen (DE)
(74) Vertreter: Klickow, Hans-Henning, Dr.-Ing.
(86) Internationale Anmeldenummer: PCT/DE2000/002967
(87) Internationale Veröffentlichungsnummer: WO 2001/017758

(56) Entgegenhaltungen:
- EP-A- 0 358 435
- US-A- 3 676 262
- US-A- 4 048 002
- US-A- 4 269 649
- US-A- 4 830 693

## Beschreibung

Die Erfindung betrifft eine Reifenaufbaumaschine mit Transferring und zwei Andrückeinheiten zur Herstellung eines Reifenrohlings, wobei die Andrückeinheiten in einer Andrückeinrichtung, die in Richtung einer Trommelachse verschiebbar angeordnet ist, zusammengefaßt und durch eine mechanische Zwangssteuerung relativ zum Transferring geführt sind, und wobei jede Andrückeinheit mit einer Mehrzahl bezüglich der Trommelachse radial verstellbarer Andrücksegmente versehen ist und die Andrücksegmente relativ zueinander mechanisch zwangsgekoppelt sind.

Die Erfindung betrifft darüber hinaus ein Verfahren zum Betreiben einer Reifenaufbaumaschine mit Transferring und zwei Andrückeinheiten, bei dem bei einer Positionierung der Andrückeinheiten eine mechanisch zwangsgekoppelte Bewegung der Andrückeinheiten durchgeführt wird, und bei dem jede der Andrückeinheiten mit radial verstellbaren Andrücksegmenten versehen wird Bekannte Andruckvorrichtungen weisen als Andrückeinheiten zwei sogenannte Glocken mit je einem zylindrischen Mantelteil und einem stegartigen Tragteil auf, wobei deren eigene Achse koaxial zur Trommelachse der Reifenaufbautrommel angeordnet ist. Die stegartigen Tragteile werden dabei mit Kolbenstangen von Pneumatikzylindern verbunden, so daß die Glocken axial in Richtung auf die Mitte der Reifenaufbautrommel und von dort zurück verschoben werden können. Dabei ist die eine Glocke mit ihrem stegartigen Tragteil und dew Pneumatikzylindern an dem Antriebsblock der Reifenaufbautrommel und die andere Glocke an einem in Richtung der Trommelachse auf dem Maschinengestell bewegbaren separaten Gestell angeordnet.

In der EP 0 358 435 wird bereits eine Reifenaufbaumaschine beschrieben, die einen Transferring und zwei Andrückeinheiten aufweist. Die Andrückeinheiten sind in einer Andrückeinrichtung in Richtung einer Trommelachse verschiebbar. Die Andrückeinheiten sind darüber hinaus über eine mechanische Zwangssteuerung relativ zum Transferring geführt. Jede Andrückeinheit ist mit einer Mehrzahl bezüglich der Trommelachse radial verstellbarer Andrücksegmente ausgestattet. Zur Durchführung einer Positionierbewegung wird von einer Gewindespindel eine Antriebsenergie in den Transferring eingeleitet.

Aus der US 4,830,693 ist es bekannt, einen Servoantrieb im Bereich einer Reifenaufbaumaschine einzusetzen. Weitere konstruktive Realisierungen von Andrückeinheiten werden in der US 4,048,002, der US 4,269,649 sowie der US 3,676,262 beschrieben. Diese Andrückeinheiten wirken auf Seitenwandteile des Reifenrohlings ein.

Den bekannten Andrückvorrichtungen haftet der Nachteil an, daß durch die Verwendung der Pneumatikzylinder kein definierter Geschwindigkeitsverlauf der Glocken vorgebbar ist und insbesondere der Andrückvorgang beider Glocken nicht immer mit Sicherheit gleichmäßig erfolgt.

Der Erfindung liegt die Aufgabe zu Grunde, eine Andrückvorrichtung zu schaffen, mit der die beiden Andrückeinheiten zur Druckausübung auf die Seitenwandteile gleichzeitig und gleichmäßig bewegt werden können.

Diese Aufgabe wird erfindungsgemäß dadurch gelöst, daß für eine Durchführung mindestens einer der Positionierbewegungen ein Servoantrieb verwendet ist, der mit einer Steuerung verbunden ist, von der ein produktabhängiges Bewegungsprofil vorgebbar ist und daß die mechanische Zwangssteuerung mindestens zwei Gewindespindeln aufweist, die entlang eines Umfangs des Transferrings verteilt angeordnet sind.

Weitere Aufgabe der vorliegenden Erfindung ist es, ein verfahren der einleitend genannten Art derart zu verbessern, daß eine gesteigerte Produktqualität erreicht werden kann.

Diese Aufgabe wird erfindungsgemäß dadurch gelöst, daß die Positionierung der Andrücksegmente mindestens zeitweilig unabhängig von der Positionierung der Andrückeinheiten relativ zum Transferring durchgeführt wird, daß die Positionierung der Andrücksegmente mechanisch zwangsgekoppelt durchgeführt wird und daß durch eine Mehrzahl von Gewindespindeln eine räumlich verteilte Krafteinleitung in einen Umfang des Transferringes durchgeführt wird.

Durch die erfindungsgemäß vorgesehene Zwangssteuerung wird sichergestellt, daß die Andrückeinheiten, jeweils spiegelbildlich zu ihrer gemeinsamen Mittelebene, den gleichen Weg zurücklegen und damit den gleichen Druck auf den betreffenden Andrückbalg bzw. auf jede Seite des Reifenrohlings ausüben, was sich letztlich positiv auf die gleichmäßige Qualität (tire uniformity) des herzustellenden Reifenrohlings (green tire) auswirkt.

Die Verschiebbarkeit der die beiden Andrückeinheiten aufnehmenden Andrückeinrichtung parallel zur Trommelachse erlaubt zudem, daß die Reifenaufbautrommel während des Karkassaufbaus frei zugänglich ist und keine Beeinträchtigung durch die Andrückeinheiten gegeben ist.

Weiterbildungen der Erfindung sind in den Unteransprüchen beschrieben. So erweist es sich als vorteilhaft, daß die Zwangssteuerung aus mechanischen Elementen besteht, die eine dauerhaft zuverlässige Funktion der Andrückeinheiten gewährleisten. Die mechanische Zwangssteuerung besteht bei einer vorteilhaften Ausführungsform aus mehreren achsparallelen Gewindespindeln mit Enden mit gegensätzlicher Gewindesteigung, die in einem Transferring axial fixiert und über einen Synchronantrieb drehbar sind und bei der' die Andrückeinheiten mit Spindelmuttern versehen sind, die mit den Enden der Gewindespindeln im Eingriff sind. Nach einer vorteilhaften Weiterbildung erfolgt der Synchronantrieb der Gewindespindeln durch ein Keilwellenprofil auf den Gewindespindeln und einen diese Keilwellenprofile erfassenden Zahnriemen.

Weiterhin ist es vorteilhaft, wenn der Antrieb der mechanischen Zwangssteuerung durch einen Servo-Motor erfolgt. Mit einem solchen Motor kann ein über ein elektronisches Programm vorgebbarer Drehzahlverlauf der Gewindespindeln und damit ein vorgewählter Geschwindigkeitsverlauf der Andrückeinheiten gefahren werden und außerdem können unterschiedliche vorbestimmte Haltepositionen eingehalten werden. Dies ist u.a. zum Anfahren des Kernsetzabstandes wichtig, wobei das Programm für das automatische Verfahren und die Haltepositionen für jeden Reifentyp in der elektronischen Steuerung hinterlegt werden kann.

Zur Vereinfachung der Konstruktion ist weiter vorgesehen, daß die Andrückeinheiten spiegelbildlich zur Mittelebene der Andrückeinrichtung ausgebildet sind.

Nach einer anderen Weiterbildung der Erfindung ist vorgesehen, daß die Andrückeinheiten Andrückelemente aufweisen, die radial verstellbar sind. Dadurch können mit der gleichen Ausrüstung Reifenrohlinge verschiedener Größen und Typen hergestellt werden. Wenn die Andrückeinrichtung auf Grund ihrer von der Reifenaufbautrommel unabhängigen Verfahrbarkeit zwischen der Reifenaufbautrommel und der Gürteltrommel steht und die Andrückelemente radial ganz nach außen gefahren sind, kann der fertige Reifenrohling zudem auch ohne Schwierigkeiten entnommen werden.

Um ein zuverlässiges und gleichmäßiges Andrücken zu ermöglichen, ist weiter vorgesehen, daß zur radialen Verstellung der Andrückelemente eine mechanische Zwangssteuerung vorgesehen ist, die vorzugsweise einen Zahnkranz und eine an jedem Andrückelement radial angeordnete Zahnstange aufweist und bei der jedem Andrückelement ein Zahnritzel zugeordnet ist, das sowohl mit dem Zahnkranz als auch mit der betreffenden Zahnstange im Eingriff ist.

Zur Berücksichtigung verschiedener Reifentypen und Reifenabmessungen ist ferner vorgesehen, daß die Andrückelemente mit schnell auswechselbaren, den verschiedenen Reifentypen in der Form angepaßten Andrücksegmenten versehen sind.

Nach einer weiteren vorteilhaften Ausbildung der Erfindung ist die Andrückeinrichtung mit einer Kernaufgabeeinrichtung kombiniert, die mit zwei Kernaufnahmeköpfen ausgerüstet ist und mit diesen Köpfen zwischen die Andrückeinheiten bis zur Trommelachse in die Andrückeinrichtung einschwenkbar ist. Außerdem sind die Andrückeinheiten und insbesondere deren Andrückelemente mit Magneten versehen, die den Kern nach dem Lösen vom jeweiligen Kernaufnahmekopf übernehmen. Durch diese Kombination ist gegenüber dem Stand der Technik der Vorteil erreicht, daß zum Setzen der Kerne und zum Andrücken der Seitenwandteile nur eine einzige Vorrichtung über die Reifenaufbautrommel gefahren werden muß, was nicht nur eine Vereinfachung der gesamten Reifenaufbaumaschine mit sich bringt, sondern auch einen spürbaren Zeitgewinn bei der Herstellung des Reifenrohlings ermöglicht.

In einer weiteren bevorzugten Ausbildungsform ist die Andrückeinrichtung an einem Laufwagen angehängt, der in einer über der Gürteltrommel und der Reifenaufbautrommel angeordneten Längsführung verfahrbar ist. Dadurch ist eine gute Zugänglichkeit im Fußbereich der Reifenaufbaumaschine erreicht.

Schließlich ist vorgesehen, daß die Andrückeinrichtung mit einer Vielzahl von am Umfang angeordneten schalenförmigen Greifsegmenten zum Erfassen des Reifenrohlings, insbesondere zwischen den beiden Andrückeinheiten, ausgerüstet ist. Die Andrückeinrichtung ist so außerdem als Vorrichtung zum Antransport des Gürtelpakets und zum Abtransport des Reifenrohlings von der Reifenaufbaumaschine geeignet.

Ein Ausführungsbeispiel der Erfindung ist in der Zeichnung weitgehend schematisch dargestellt und wird im folgenden näher erläutert. Es zeigen
- Fig. 1: eine Reifenaufbaumaschine mit einer Andrückeinrichtung in einer Seitenansicht,
- Fig. 2: die Andrückeinrichtung in einer teilweise geschnittenen Stirnansicht in Richtung des Pfeiles 11 in Fig. 1,
- Fig. 3: die Andrückeinrichtung in einer Stirnansicht in Richtung des Pfeiles 111 in Fig. 1,
- Fig. 4 bis Fig. 11: die Reifenaufbaumaschine bei der Herstellung eines Reifenrohlings in verschiedenen in der Beschreibung angegebenen Herstellungsschritten in einem auszugsweisen Längsschnitt.

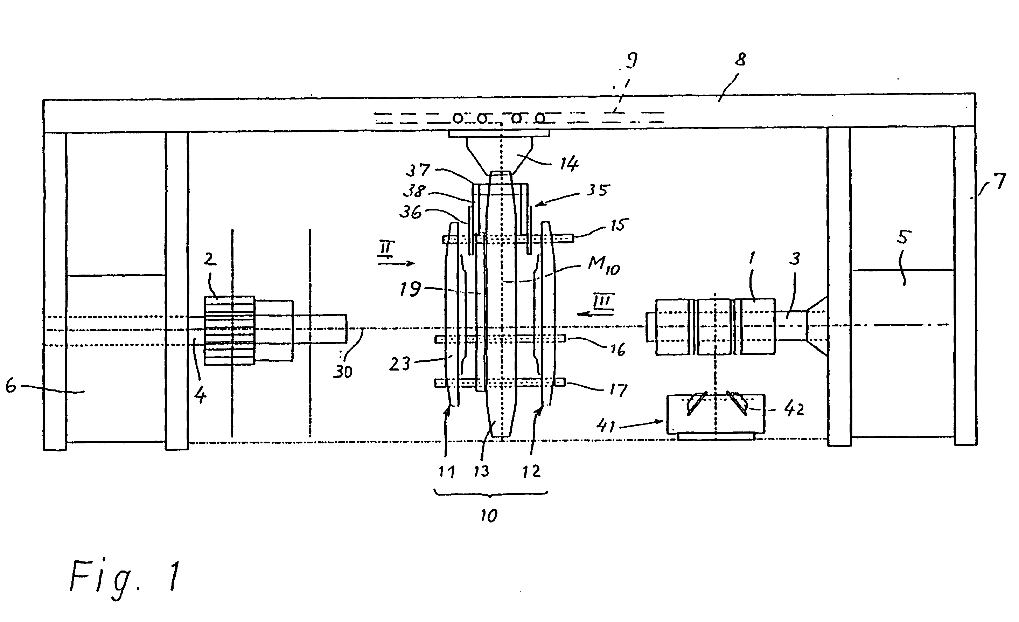

Die Reifenaufbaumaschine gemäß Fig. 1 weist eine auch als Bombier-, Karkass- oder Konfektioniertrommel bezeichnete Reifenaufbautrommel (1) und eine Gürteltrommel (2) auf, die jeweils auf einer fliegend bzw. kragend gelagerten Antriebswelle (3) bzw. (4) eines Antriebsblocks (5) bzw. (6) angeordnet sind. Beide Antriebsblöcke (5), (6) befinden sich an entgegengesetzten Enden eines Maschinengestells (7), an dem oben eine Längstraverse 8 mit integrierter Längsführung 9 angeordnet ist. Die kragend bzw. fliegend gelagerten Antriebswellen (3), (4) sind koaxial angeordnet und mit ihren freien Enden in die Mitte des Gestells bzw. auf die jeweils andere Antriebswelle gerichtet.

Die Reifenaufbaumaschine (1) ist außerdem mit einer Andrück- oder Puschereinrichtung (10) versehen, die zwei Andrück- oder Puschereinheiten (11,12) umfaßt. Die Puschereinrichtung hat als tragendes Bauteil mittig zwischen den beiden Puschereinheiten einen Transferring (13), der an einem Laufwagen (14) befestigt ist, der wiederum in der Längsführung (9) verfahrbar gelagert ist. Der Laufwagen (14) mit der Puschereinrichtung (10) kann im wesentlichen in den gesamten Bereich zwischen den Antriebsblöcken (5) und (6) bewegt werden und somit sowohl über die Gürteltrommel (2) als auch über die Reifenaufbautrommel (1) fahren.

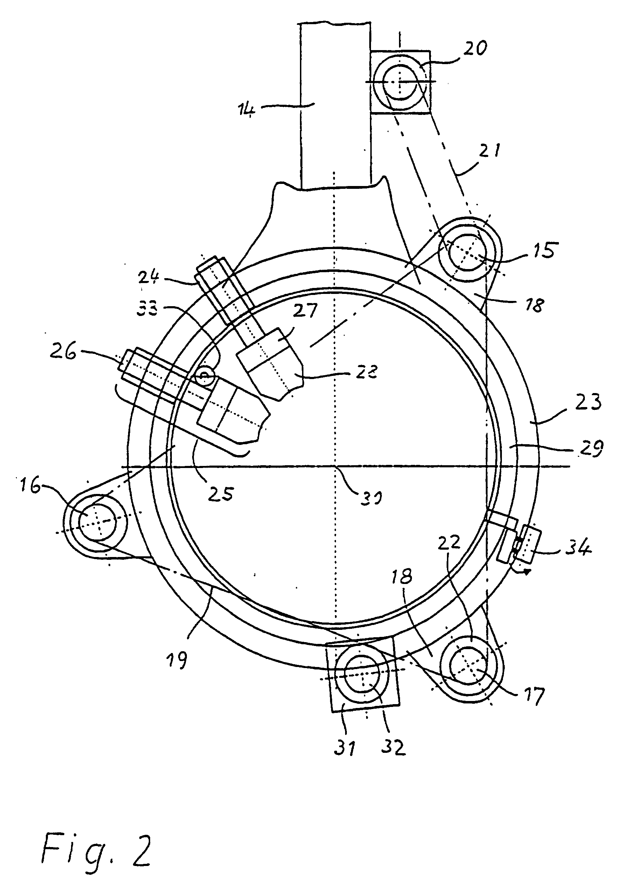

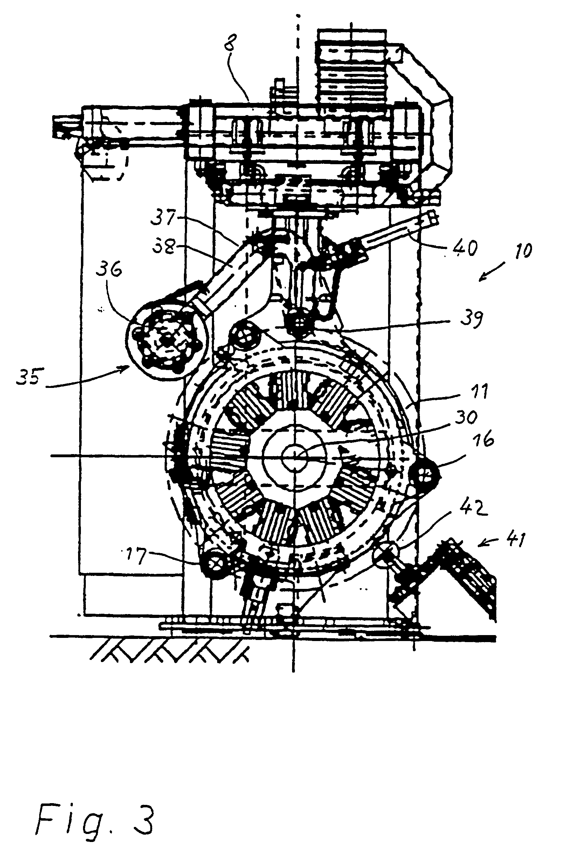

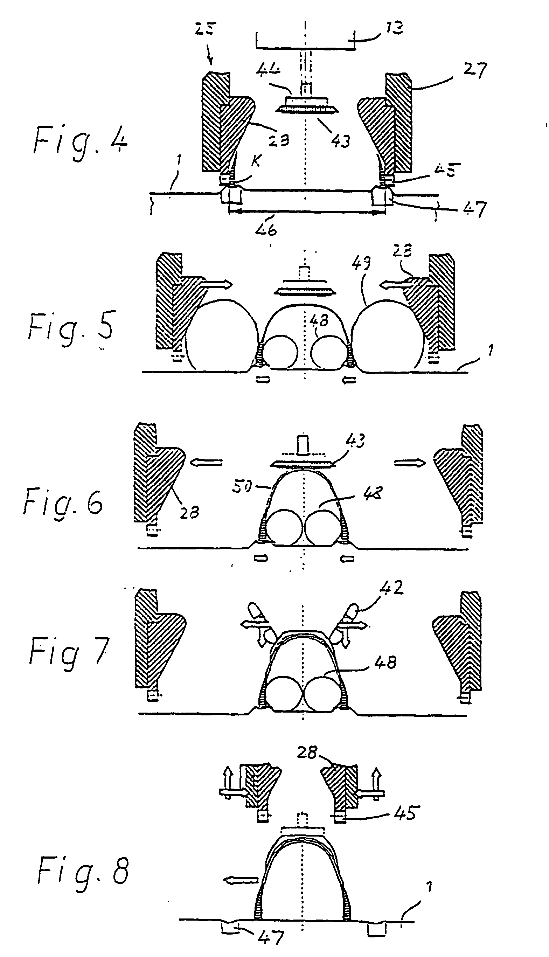

Der Transferring (13) trägt drei Gewindespindeln (15, 16,17), die am Umfang verteilt mit ihrem mittleren Teil jeweils in einem Lagerauge oder Lagerbock (18) außen am Transferring (13) drehbar gelagert sind. Dabei sind die Gewindespindeln (15,16,17) gegenüber dem Transferring axial fixiert. An einer Seite des Transferrings (13) sind die Gewindespindeln (15,16,17) mit einem Keilwellenprofil versehen und von einem gemeinsamen Zahnriemen (19) umgeben (Fig. 2). Dieser Zahnriemen stellt eine formschlüssige Verbindung unter den Gewindespindeln (15,16,17) dar, durch die die Gewindespindeln immer die gleiche Drehbewegung ausführen und immer die gleiche Drehzahl aufweisen, d.h. synchron laufen. Der Antrieb der Gewindespindeln (15,16,17) erfolgt über einen Servo-Motor (20), der über einen weiteren Zahnriemen (21) mit der Gewindespindel (15) formschlüssig verbunden ist. Mit Hilfe des Servo-Motors (20) kann die Drehzahl und der Drehzahlverlauf der Gewindespindeln (15,16,17) und damit der Weg und der Geschindigkeitsverlauf der beiden Puschereinheiten (11,12) vorgewählt werden. Es können auch unterschiedliche Haltepositionen der Puschereinheiten und damit deren gegenseitiger Abstand zueinander über ein elektrisches Programm vorgegeben werden. Die Endpositionen der Puschereinheiten 11, (12) können durch nicht dargestellte Näherungsschalter abgefragt werden.

Die Puschereinheiten (11,12) sind spiegelbildlich baugleich in bezug auf die Mittelebene (M10) der Puschereinrichtung (10) ausgebildet. Jede Puschereinheit weist einen mit drei Spindelmuttern (22) versehenen Tragring (23) auf, wobei beide Tragringe über die Spindelmuttern (22) von allen drei Gewindespindeln (15,16,17) gemeinsam gehalten werden.

Die Gewindespindeln (15,16,17) weisen an ihren beiden Enden eine gegensätzliche Gewindesteigung auf. Werden die Gewindespindeln in der oben beschriebenen Weise synchron gedreht, so bewegen sich die Tragringe (23) je nach Drehrichtung der Gewindespindeln gleichmäßig auf die Mittelebene (M10) der Puschereinrichtung (10) zu oder von ihr weg.

An jedem Tragring (23) befinden sich an der der Mittelebene (M10) der Puschereinrichtung (10) zugewandten Seite radial ausgerichtete Führungen (24) mit Andrück- oder Puscherelementen (25), von denen in Fig. 2 der Einfachheit halber nur zwei dargestellt sind. Die Puscherelemente (25) bestehen jeweils aus einer Zahnstange (26), die sich unmittelbar in der betreffenden Führung (24) befindet, und einer Platte (27), wie dies in Fig. 2 und Fig. 4 dargestellt ist. An diesen Platten ist jeweils ein leicht auswechselbares, reifenabhängiges Andrück- oder Puschersegment (28) befestigt, das in seiner Form dem jeweiligen herzustellenden Reifenrohling .. angepaßt ist. Die Umstellung der Reifenaufbaumaschine für unterschiedliche Reifendurchmesser und -typen kann so ohne große Stillstands- oder Umrüstzeiten erfolgen.

An jedem Tragring (23) ist ein Zahnkranz (29) mit einer Außen- und Innenverzahnung koaxial zur gemeinsamen Trommelachse (30) der Trommeln (1) und (2) drehbar gelagert. Der Zahnkranz (29) wird von einem Servomotor (31), dessen Zahnritzel (32) mit der Außenverzahnung des Zahnrades (29) im Eingriff steht, in Drehung versetzt.

Jedem Puscherelement (25) ist ein Zahnritzel (33) zugeordnet, das an der Innenseite des Tragrings (23) gelagert ist und sowohl in die Innenverzahnung des Zahnkranzes (29) als auch in die Verzahnung der zugehörigen Zahnstange (26) eingreift. Durch Betätigen des Servo-Motors (31) können Puscherelemente (25) und entsprechend die Puschersegmente (28) zur Anpassung an eine andere Reifengröße radial zur Trommelachse (30) hin oder von ihr weg verstellt und zur späteren Entnahme des fertigen Reifenrohlings radial ganz nach außen gefahren werden. Mit Hilfe von ein- und ausschwenkbaren mechanischen Anschlägen (34) kann die Dreh- bzw. Schwenkbewegung des Zahnkranzes (29) begrenzt werden. Zur Anpassung an einen anderen Reifentyp können zusätzlich die schnell auswechselbaren Puschersegmente (28) durch entsprechende andere ausgetauscht werden.

Die Puschereinrichtung (10) ist mit einer Kernaufgabeoder Kernsetzeinrichtung (35) mit einem linken und einem rechten Kernaufnahmekopf (36) kombiniert, der im folgenden auch nur kurz als Aufnahmekopf bezeichnet wird. Beide Aufnahmeköpfe (36) sind an einem gemeinsamen Rahmen (37) befestigt, der einen linken und einen rechten winkelförmigen Schwenkarm (38) aufweist und um eine parallel zur Trommelachse (30) angeordnete Achse (39) an der Puschereinrichtung (10) schwenkbar gelagert ist. Der Rahmen (37) wird durch einen Pneumatikzylinder (40) angetrieben. Die an ihren einander abgewandten Seiten mit je einem Aufnahmekopf (36) versehenen Schwenkarme (38) weisen zueinander einen derartigen Abstand auf und haben eine winkelförmig gebogene Gestalt, daß die Aufnahmeköpfe (36) an der Gewindespindel (15) vorbei bis zur Trommelachse (30) einschwenken zu können.

Die Reifenaufbaumaschine (1) umfaßt ferner einen Anroller (41) mit in ihrer Stellung beweglichen Andrückrollen (42).

Im folgenden wird die Funktion der Reifenaufbaumaschine und insbesondere der Puschereinrichtung (10) mit der Kernaufgabeeinrichtung (35) im Zusammenhang mit der Herstellung eines Reifenrohlings erläutert, wobei einige Einzelheiten lediglich des Zusammenhangs wegen erwähnt werden, in dem die Erfindung steht.

In der Ausgangsstellung befindet sich die Puschereinrichtung (10) mit der Kernaufgabeeinrichtung (35), wie in Fig. 1 dargestellt, in der Mitte der Reifenaufbaumaschine zwischen der Gürteltrommel (2) und der Reifenaufbautrommel (1).

In einem ersten Arbeitsschritt [1] werden die Streifen für den Gürtel und der Laufstreifen automatisch auf die Gürteltrommel (2) aufgewickelt und zusammengefügt. Gleichzeitig werden die Streifen für die Innenlage (innerliner), die Seitenwand und weitere Lagen (body ply) automatisch auf die Reifenaufbautrommel (1) aufgewickelt und zusammengefügt. Während dieser Zeit werden die Kerne (K) mit den Kernreitern manuell auf den Kernaufnahmekopf (36) der Kernaufgabeeinrichtung (35) gegeben.

In einem zweiten Arbeitsschritt [2] fährt die Puschereinrichtung (10) nach links über die Gürteltrommel (2) und übernimmt das dort fertiggestellte Gürtelpaket (43) mit Hilfe von Greifsegmenten (44) (Fig. 5), die dem Durchmesser des Reifenrohlings angepaßte Schalen aufweisen und radial verstellbar im Transferring (13) gehalten werden. Die Puschereinrichtung (10) fährt dann wieder zurück in die Ausgangsstellung gemäß Fig. 1 und schwenkt die Kernaufgabeeinrichtung (35) mit ihren beiden mit den Aufnahmeköpfen (36) versehenen Schwenkarmen (38) rechts und links am Gürtelpaket (43) vorbei jeweils an die Innenseite der Puschereinheiten (11,12). Diese werden synchron in Richtung zur Mittelebene (M10) der Puschereinrichtung (10) gefahren, bis sie den jweiligen Kern (K) von der Kernaufgabeeinrichtung (35) abnehmen, wozu den Kern (K) haltende nicht dargestellte Segmente in den Aufnahmeköpfen (36) zurückgezogen werden. Zum Erfassen der Kerne sind in den Puschersegmenten (28) Magnete (45) eingelassen. Nach dem Zurückfahren der Segmente und dem Erfassen der Kerne (K) durch die Puschereinheiten (11,12) wird die Kernaufgabeeinrichtung (35) wieder in ihre in Fig. 3 dargestellte Grund- oder Ausgangsstellung zurückgeschwenkt.

In einem dritten Arbeitsschritt [3] fährt die Puschereinrichtung (10), bei der die Puschereinheiten (11,12) auf den Kernübergabeabstand (46) auseinandergefahren sind, über die Reifenaufbautrommel (1) (Fig. 4). Die Kernspannelemente (47) der Reifenaufbautrommel (1) erfassen die Kerne (K) und halten sie fest, und die Puschereinheiten (11,12) werden durch Drehen der Gewindespindeln (15,16,17) synchron von der gemeinsamen Mittelebene (M10) weg in ihre äußere Grundstellung gefahren. Dabei bleibt aber der Transferring (13) unverändert über der Reifenaufbautrommel (1) in deren Trommelmitte stehen.

In einem vierten Arbeitsschritt [4] werden die solange flach auf der Trommelfläche der Reifenaufbautrommel (1) aufliegenden Seitenwandteile des Reifenrohlings um den Kern (K) nach oben umgeschlagen. Dabei werden die inneren Seitenwandteile der Karkasslage, bei gleichzeitigem Vorbombieren der Karkasslage und Zusammenfahren der Trommelseitenteile mit den Kernspannelemente (47) Richtung Trommelmitte, durch Stütz- oder Schulterbälge (48) der Reifenaufbautrommel (1) nach oben gerichtet. Die äußeren Seitenwandteile werden jeweils durch einen Andrück-, Umschlag- oder Turn-up-Balg (49) (Fig. 5) nach oben gerichtet und an die Außenseite der Karkasslage des Reifenrohlings angedrückt.

Soll der Laufstreifen bei einem sogenannten TOS-Typ (top-on-side-Typ) über der Seitenwand zu liegen kommen, so werden die Puschereinheiten (11,12) mit den Puscherelementen (25) in einem fünften Arbeitsschritt [5] axial zusammengefahren und üben so einen zusätzlichen Druck über die aufgeblasenen Andrück- bzw, Umschlagbälge (49) auf die Seitenwandteile aus (Fig. 5). Hierbei kann der Druck in den Umschlagbälgen reduziert werden, damit die Kraftkomponente für das Zusammenfügen der Materiallagen auch im oberen Bereich der Seitenwand wirken kann.

Nach dem Umschlagen und Andrücken der Seitenwandteile fahren die Puschereinheiten (11,12) in einem sechsten Arbeitsschritt [6] wieder auseinander. Die Karkasse (50) wird, wie in Fig. 6 dargestellt, in das Gürtelpaket (43) hineinbombiert und anschließend der Laufstreifen mit den Andrückrollen (42) des Anrollers (41) angerollt (Fig. 7). Dazu wird der Anroller (41) derart programmgesteuert, daß seine Andrückrollen (42) über den Laufstreifen bis einschließlich seinem seitlichen Auslauf fahren und die Materialien zusammenfügen.

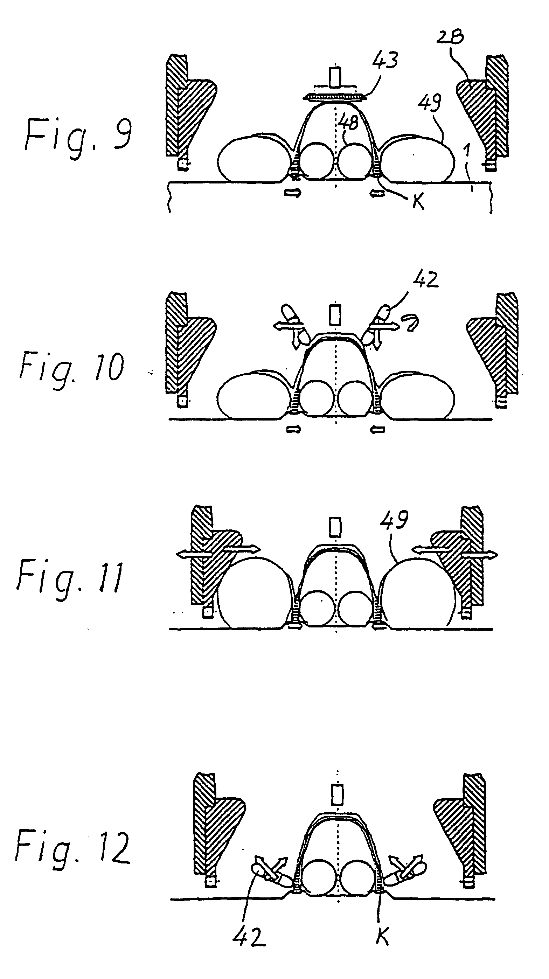

In einem letzten Arbeitsschritt [7] werden die Kernspannelemente (47) in der Reifenaufbautrommel (1) ganz in ihre Grundstellung zurückgefahren, die Trommelseitenteile in ihre Ausgangsstellung auseinandergefahren (Fig. 8) und die Puscherelemente (25) mit Hilfe der Verzahnungsübertragung, nämlich dem Zahnritzel (32), dem Zahnkranz (29), dem Zahnritzel (33) und der Zahnstange (26), radial ganz nach außen gefahren. Der Transferring (13) erfaßt und hält den fertigen Reifenrohling mit seinen, Greifsegmenten (44) und wird zur Entnahme des Reifenrohlings in seine Ausgangsstellung in der Mitte der Reifenaufbaumaschine gefahren.

Soll die Seitenwand bei einem sogenannten SOT-Typ (side-on-top-Typ) über dem Laufstreifen zu liegen kommen, so sind die ersten vier Arbeitsschritte [1] ... [4] identisch mit den oben beschriebenen.

In dem folgenden fünften Arbeitsschritt [5A] werden die Schulterbälge (48) wie oben beschrieben ganz, die Umschlagbälge (49) dagegen nur teilweise aufgeblasen, so daß die äußeren Seitenwandteile, wie in Fig. 9 dargestellt, zwar um die Kerne (K) umgeschlagen werden, aber auf den Umschlagbälgen (49) liegen bleiben.

Beim sechsten Arbeitsschritt [6A] wird der Laufstreifen nach dem Bombieren der Karkassiagen (50), wie in Fig. 10 dargestellt, mit den Andrückrollen (42) des Anrollers (41) angedrückt, wobei die Laufrollen programmgesteuert über den Auslauf des Laufstreifens fahren und die Materialien zusammendrücken.

Nach dem Anrollen des Laufstreifens werden die Puschereinheiten (11,12) in einem siebten Arbeitsschritt [7A] wieder axial zusammengefahren und drücken das letzte Ende der Seitenwand unter Zwischenschaltung des jeweiligen Umschlagbalgs (49), wie in Fig. 11 veranschaulicht, so daß dieser über dem Laufstreifenauslauf zu liegen kommt. Auch hier wird der Druck in den Umschlagbälgen reduziert, damit die Kraftkomponente für das Zusammenfügen der Materiallagen auch im oberen Bereich der Seitenwand wirken kann.

Je nach Reifentyp kann noch ein Anrollen der Seitenwand mit dem Anroller (41) von ihrem unteren Bereich bis über den Laufstreifen erfolgen, dies entspricht Arbeitsschritt [8A], (Fig. 12).

In einem letzten Arbeitsschritt [9A] werden die Kernspannelemente (47) in der Reifenaufbautrommel (1) wieder ganz in ihre Grundstellung zurückgefahren, die Trommelseitenteile in ihre Ausgangsstellung auseinandergefahren und die Puscherelemente (25) mit Hilfe der Verzahnungsübertragung radial ganz nach außen gefahren. Der Transferring (13) hält den fertigen Reifenrohling mit seinen Greifsegmenten (44) und wird zur Entnahme des Reifenrohlings in seine Ausgangsstellung in der Mitte der Reifenaufbaumaschine gefahren.

## Patentansprüche

1. Reifenaufbaumaschine mit Transferring (13) und zwei Andrückeinheiten (10, 11) zur Herstellung eines Reifenrohlings, wobei die Andrückeinheiten (11, 12) in einer Andrückeinrichtung (10), die in Richtung einer Trommelachse (30) verschiebbar angeordnet ist, zusammengefaßt und durch eine mechanische Zwangssteuerung relativ zum Transferring (13) geführt sind, und wobei jede Andrückeinheit (10, 11) mit einer Mehrzahl bezüglich der Trommelachse (30) radial verstellbarer Andrücksegmente (28) versehen ist und die Andrücksegmente (28) relativ zueinander mechanisch zwangsgekoppelt sind, **dadurch gekennzeichnet, daß** für eine Durchführung mindestens einer der Positionierbewegungen ein Servoantrieb verwendet ist, der mit einer Steuerung verbunden ist, von der ein produktabhängiges Bewegungsprofil vorgebbar ist und daß die mechanische Zwangssteuerung mehrere Gewindespindeln (15, 16, 17) aufweist, die entlang eines Umfangs des Transferrings (13) verteilt angeordnet sind.

2. Reifenaufbaumaschine nach Anspruch 1, **dadurch gekennzeichnet, daß** die mechanische Zwangssteuerung eine synchrone Auseinander- und Zusammenfahrbewegung der Andrückeinheiten (10, 11) relativ zu einer Mittelebene (M10) der Andrückeinrichtung (10) vorgibt.

3. Reifenaufbaumaschine nach Anspruch 2, **dadurch gekennzeichnet, daß** die mechanischen Elemente als achsparallele Gewindespindeln (15, 16, 17) mit Enden mit gegensätzlicher Gewindesteigung ausgebildet sind, die in einem Transferring (13) axial fixiert und über einen Synchronantrieb drehbar sind, und daß die Andrückeinheiten (11, 12) mit Spindelmuttern (22) versehen sind, die mit den Enden der Gewindespindeln (15, 16, 17) im Eingriff sind.

4. Reifenaufbaumaschine nach Anspruch 3, **dadurch gekennzeichnet, daß** der Synchronantrieb der Gewindespindeln (15, 16, 17) durch ein Keilwellenprofil auf den Gewindespindeln und einen diese Keilwellenprofile erfassenden Zahnriemen (19) erfolgt.

5. Reifenaufbaumaschine nach einem der Ansprüche 2 bis 4, **dadurch gekennzeichnet, daß** der Antrieb der mechanischen Zwangssteuerung durch einen Servo-Motor (20) erfolgt.

6. Reifenaufbaumaschine nach Anspruch 5, **dadurch gekennzeichnet, daß** der Servo-Motor (20) und mit ihm die Gewindespindeln (15, 16, 17) über ein elektronisches Programm mit einem vorgebbaren Drehzahlverlauf und die Andrückeinheiten (11, 12) mit einem vorgewählten Geschwindigkeitsverlauf einschließlich vorbestimmter Haltepositionen gefahren werden.

7. Reifenaufbaumaschine nach Anspruch 6, **dadurch gekennzeichnet, daß** der vorgebbare Drehzahlverlauf, der Geschwindigkeitsverlauf und die vorbestimmten Haltepositionen in einer elektronischen Steuerung hinterlegt sind.

8. Reifenaufbaumaschine nach einem der Ansprüche 1 bis 7, **dadurch gekennzeichnet, daß** die Andrückeinheiten (11, 12) spiegelbildlich zur Mittelebene (M10) der Andrückeinrichtung (10) ausgebildet sind.

9. Reifenaufbaumaschine nach einem der Ansprüche 1 bis 8, **dadurch gekennzeichnet, daß** die Andrückeinheiten (11, 12) Andrückelemente (25) aufweisen, die radial verstellbar sind.

10. Reifenaufbaumaschine nach Anspruch 9, **dadurch gekennzeichnet, daß** zur radialen Verstellung der Andrückelemente (25) eine mechanische Zwangssteuerung vorgesehen,ist.

11. Reifenaufbaumaschine nach Anspruch 10, **dadurch gekennzeichnet, daß** die mechanische Zwangssteuerung zur radialen Verstellung der Andrückelemente (25) einen Zahnkranz (29) und eine an jedem Andrückelement (25) radial angeordnete Zahnstange (26) aufweist und daß jedem Andrückelement (25) ein Zahnritzel (33) zugeordnet ist, das sowohl im Eingriff mit dem Zahnkranz (29) als auch mit der betreffenden Zahnstange (26) ist.

12. Reifenaufbaumaschine nach einem der Ansprüche 1 bis 11, **dadurch gekennzeichnet, daß** die Andrückelemente (25) mit schnell auswechselbaren, reifenabhängigen Andrücksegmenten (28) versehen sind.

13. Reifenaufbaumaschine nach einem der Ansprüche 6 bis 8, **dadurch gekennzeichnet, daß** die Andrückeinrichtung (10) mit einer mit zwei Kernaufnahmeköpfen (36) ausgerüsteten Kernaufgabeeinrichtung (35) versehen ist, die mit ihren Kernaufnahmeköpfen (36) zwischen die Andrückeinheiten (11, 12) bis zur Trommelachse (30) in die Andrückeinrichtung (10) einschwenkbar ist und daß die Andrückelemente (25) der Andrückeinheiten (11, 12) mit Magneten (45) versehen sind.

14. Reifenaufbaumaschine nach Anspruch 13, **dadurch gekennzeichnet, daß** die Andrückelemente (25) der Andrückeinheiten (11,12) mit den Magneten (45) versehen sind.

15. Reifenaufbaumaschine nach Anspruch 14, **dadurch gekennzeichnet, daß** die Andrücksegmente (28) der Andrückelemente (25) mit den Magneten (45) versehen sind.

16. Reifenaufbaumaschine nach einem der Ansprüche 1 bis 15, **dadurch gekennzeichnet, daß** die Andrückeinrichtung (10) an einem Laufwagen (14) angehängt ist, der in einer über der Gürteltrommel (2) und der Reifenaufbautrommel (1) angeordneten Längsführung (9) verfahrbar ist.

17. Reifenaufbaumaschine nach einem der Ansprüche 1 bis 16, **dadurch gekennzeichnet, daß** die Andruckeinrichtung (10) mit einer Vielzahl von am Umfang angeordneten schalenförmigen Greifsegmenten (44) ausgerüstet ist.

18. Reifenaufbaumaschine nach Anspruch 17, **dadurch gekennzeichnet, daß** die schalenförmigen Greifsegmente (44) zwischen den beiden Andrückeinheiten (11, 12) angeordnet sind.

19. Verfahren zum Betreiben einer Reifenaufbaumaschine mit Transferring (13) und zwei Andrückeinheiten (10, 11), bei dem bei einer Positionierung der Andrückeinheiten (10, 11) eine mechanisch zwangsgekoppelte Bewegung der Andrückeinheiten (10, 11) durchgeführt wird, und bei dem jede der Andrückeinheiten (11, 12) mit radial verstellbaren Andrücksegmenten (28) versehen wird, **dadurch gekennzeichnet, daß** die Positionierung der Andrücksegmente (28) mindestens zeitweilig unabhängig von der Positionierung der Andrückeinheiten (10, 11) relativ zum Transferring (13) durchgeführt wird, daß die Positionierung der Andrücksegmente (28) mechanisch zwangsgekoppelt durchgeführt wird und daß durch eine Mehrzahl von Gewindespindeln (15, 16, 17) eine räumlich verteilte Krafteinleitung in einen Umfang des Transferringes (13) durchgeführt wird.

## Claims

1. Tyre lay-up machine having a transfer ring (13) and two pressure-applying units (10, 11) for manufacturing a tyre blank, wherein the pressure-applying units (11, 12) are integrated into a pressure-applying apparatus (10) which is disposed so as to be displaceable in the direction of an axis (30) of a drum, and are guided by a mechanical-constraint-type control system relative to the transfer ring (13), and wherein each pressure-applying unit (10, 11) is provided with a plurality of pressure-applying segments (28) which are adjustable radially with respect to the axis (30) of the drum and said pressure-applying segments (28) are coupled by mechanical constraint, relative to one another, **characterised in that** use is made, for carrying out at least one of the positioning movements, of a servo drive which is connected to a control system by which a product-dependent movement profile can be predetermined, and that the mechanical-constraint-type control system has a number of threaded spindles (15, 16, 17) which are disposed so as to be distributed along a periphery of the transfer ring (13).

2. Tyre lay-up machine according to claim 1, **characterised in that** the mechanical-constraint-type control system predetermines a synchronous diverging and converging movement of the pressure-applying units (10, 11) relative to a central plane (M10) of the pressure-applying apparatus (10).

3. Tyre lay-up machine according to claim 2, **characterised in that** the mechanical elements are constructed as axially parallel threaded spindles (15, 16, 17) having ends with an opposite thread pitch, which threaded spindles are axially fixed in a transfer ring (13) and can be rotated via a synchronous drive, and that the pressure-applying units (11, 12) are provided with spindle nuts (22) which are in engagement with the ends of the threaded spindles (15, 16, 17).

4. Tyre lay-up machine according to claim 3, **characterised in that** the synchronous driving of the threaded spindles (15, 16, 17) takes place by means of a splined-shaft profile on said threaded spindles and a toothed belt (19) that grips said splined-shaft profiles.

5. Tyre lay-up machine according to one of claims 2 to 4, **characterised in that** the driving of the mechanical-constraint-type control system takes place by means of a servo motor (20).

6. Tyre lay-up machine according to claim 5, **characterised in that** the servo motor (20) and, with it, the threaded spindles (15, 16, 17) are operated via an electronic program with a predeterminable rotational-speed variation, and the pressure-applying units (11, 12) are operated with a preselected speed variation including predetermined stopping positions.

7. Tyre lay-up machine according to claim 6, **characterised in that** the predeterminable rotational-speed variation, the speed variation and the predetermined stopping positions are stored in an electronic control system.

8. Tyre lay-up machine according to one of claims 1 to 7, **characterised in that** the pressure-applying units (11, 12) are constructed in a mirror-inverted manner in relation to the central plane (M10) of the pressure-applying apparatus (10).

9. Tyre lay-up machine according to one of claims 1 to 8, **characterised in that** the pressure-applying units (11, 12) have pressure-applying elements (25) which are radially adjustable.

10. Tyre lay-up machine according to claim 9, **characterised in that** a mechanical-constraint-type control system is provided for radially adjusting the pressure-applying elements (25).

11. Tyre lay-up machine according to claim 10, **characterised in that** the mechanical-constraint-type control system for radially adjusting the pressure-applying elements (25) has a toothed rim (29) and a toothed rack (26) which is disposed radially on each pressure-applying element (25), and that a toothed pinion (33), which is in engagement both with the toothed rim (29) and also with the toothed rack (26) in question, is associated with each pressure-applying element (25).

12. Tyre lay-up machine according to one of claims 1 to 11, **characterised in that** the pressure-applying elements (25) are provided with rapidly interchangeable, tyre-dependent pressure-applying segments (28).

13. Tyre lay-up machine according to one of claims 6 to 8, **characterised in that** the pressure-applying apparatus (10) is provided with a core-feeding apparatus (35) which is equipped with two core-receiving heads (36) and which can be pivoted into the pressure-applying apparatus (10) between the pressure-applying units (11, 12) as far as the axis (30) of the drum, and that the pressure-applying elements (25) of the pressure-applying units (11, 12) are provided with magnets (45).

14. Tyre lay-up machine according to claim 13, **characterised in that** the pressure-applying elements (25) of the pressure-applying units (11, 12) are provided with the magnets (45).

15. Tyre lay-up machine according to claim 14, **characterised in that** the pressure-applying segments (28) of the pressure-applying elements (25) are provided with the magnets (45).

16. Tyre lay-up machine according to one of claims 1 to 15, **characterised in that** the pressure-applying apparatus (10) is hitched onto a travelling carriage (14) which is capable of travelling in a longitudinal guide (9) disposed above the bracing-ply drum (2) and the tyre lay-up drum (1).

17. Tyre lay-up machine according to one of claims 1 to 16, **characterised in that** the pressure-applying apparatus (10) is equipped with a multitude of dish-shaped gripping segments (44) disposed on the periphery.

18. Tyre lay-up machine according to claim 17, **characterised in that** the dish-shaped gripping segments (44) are disposed between the two pressure-applying units (11, 12).

19. Method of operating a tyre lay-up machine having a transfer ring (13) and two pressure-applying units (10, 11), in which method a movement of the pressure-applying units (10, 11) which is coupled by mechanical constraint is carried out during positioning of said pressure-applying units (10, 11), and in which method each of the pressure-applying units (11, 12) is provided with radially adjustable pressure-applying segments (28), **characterised in that** the positioning of the pressure-applying segments (28) is carried out, at least temporarily, independently of the positioning of the pressure-applying units (10, 11) relative to the transfer ring (13), that the positioning of the pressure-applying segments (28) is carried out in a manner coupled by mechanical constraint, and that a spatially distributed introduction of force into a periphery of the transfer ring (13) is carried out by a plurality of threaded spindles (15, 16, 17).

## Revendications

1. Machine de fabrication de pneumatiques avec anneau de transfert (13) et deux unités de pression (10, 11), pour la fabrication d'une ébauche de pneu, les unités de pression (11, 12) étant groupées dans un dispositif de pression (10) qui est agencé de manière mobile dans la direction de l'axe d'un tambour (30), et étant guidées par une commande mécanique forcée, relativement à l'anneau de transfert (13), et chaque unité de pression (10, 11) étant pourvue de plusieurs segments de pression (28), mobiles dans le sens radial par rapport à l'axe du tambour (30), et lesdits segments de pression (28) étant couplés mécaniquement de manière forcée relativement les uns aux autres, **caractérisée en ce que**, pour l'exécution d'au moins l'un des mouvements de positionnement, on utilise une servocommande qui est reliée à une commande par laquelle un profil de mouvement dépendant du produit peut être prédéterminé, et **en ce que** la commande mécanique forcée présente plusieurs tiges filetées (15, 16, 17) qui sont agencées en étant réparties le long d'un pourtour de la bague de transfert (13).

2. Machine de fabrication de pneumatiques selon la revendication 1, **caractérisée en ce que** la commande mécanique forcée prédétermine un mouvement d'écartement et de rapprochement synchrone des unités de pression (10, 11) par rapport à un plan médian (M10) du dispositif de pression (10.

3. Machine de fabrication de pneumatiques selon la revendication 2, **caractérisée en ce que** les éléments mécaniques sont conçus en tant que tiges filetées (15, 16, 17) parallèles dans le sens axial, avec des extrémités présentant des pas de vis opposés, qui sont fixées dans le sens axial dans un anneau de transfert (13) et peuvent être menées en rotation par l'intermédiaire d'un entraînement synchrone, et **en ce que** les unités de pression (11, 12) sont pourvues d'écrous de vis (22) qui sont en prise avec les extrémités des tiges filetées (15, 16, 17).

4. Machine de fabrication de pneumatiques selon la revendication 3, **caractérisée en ce que** l'entraînement synchrone des tiges filetées (15, 16, 17) est produit à l'aide d'un profil cannelé des tiges filetées, et d'une courroie dentée (19) qui coopère avec lesdits profils cannelés.

5. Machine de fabrication de pneumatiques selon la revendication 2, **caractérisée en ce que** l'entraînement de la commande mécanique forcée est effectué par un servomoteur (20).

6. Machine de fabrication de pneumatiques selon la revendication 5, **caractérisée en ce que** le servomoteur (20) et, avec lui, les tiges filetées (15, 16, 17) sont menés par l'intermédiaire d'un programme électronique, avec un nombre de tours à parcourir pouvant être prédéterminé, et les unités de pression (11, 12) sont menées avec un profil de vitesse présélectionné, y compris des positions d'arrêt prédéterminées.

7. Machine de fabrication de pneumatiques selon la revendication 6. **caractérisée en ce que** le nombre de tours à parcourir pouvant être prédéterminé, le profil de la vitesse et les positions d'arrêt prédéterminées sont enregistrés dans une commande électronique.

8. Machine de fabrication de pneumatiques selon l'une des revendications 1 à 7, **caractérisée en ce que** les unités de pression (11, 12) sont conçues inversées par rapport au plan médian (M10) du dispositif de pression (10).

9. Machine de fabrication de pneumatiques selon l'une des revendications 1 à 8, **caractérisée en ce que** les unités de pression (11, 12) présentent des éléments de pression (25) qui peuvent être déplacés dans le sens radial.

10. Machine de fabrication de pneumatiques selon la revendication 9, **caractérisée en ce qu'**une commande mécanique forcée est prévue pour le déplacement radial des éléments de pression (25).

11. Machine de fabrication de pneumatiques selon la revendication 10, **caractérisée en ce que** la commande mécanique forcée pour le déplacement radial des éléments de pression (25) présente une couronne dentée (29) et une tige dentée (26) disposée dans le sens radial à chaque élément de pression (25), et **en ce qu'**à chaque élément de pression est coordonné un pignon denté (33) qui est en prise aussi bien avec la couronne dentée (29) qu'avec la tige dentée (26) correspondante.

12. Machine de fabrication de pneumatiques selon l'une des revendications 1 à 11, **caractérisée en ce que** les éléments de pression (25) sont pourvus de segments de pression (28) à changement rapide, fonction des pneumatiques.

13. Machine de fabrication de pneumatiques selon l'une des revendications 6 à 8, **caractérisée en ce que** le dispositif de pression (10) est pourvu d'un dispositif de formation du noyau (35) équipé de deux têtes de réception de noyau (36), qui peut être pivoté avec ses têtes de réception de noyau (36) entre les unités de pression (11, 12), jusqu'à l'axe du tambour (30), dans le dispositif de pression (10).

14. Machine de fabrication de pneumatiques selon la revendication 13, **caractérisée en ce que** les éléments de pression (25) des unités de pression (11, 12) sont pourvus d'aimants (45).

15. Machine de fabrication de pneumatiques selon la revendication 14, **caractérisée en ce que** les segments de pression (28) des éléments de pression (25) sont pourvus d'aimants.

16. Machine de fabrication de pneumatiques selon l'une des revendications 1 à 15, **caractérisée en ce que** le dispositif de pression (10) est accroché à un chariot (14) qui peut être déplacé dans un guide longitudinal (9) disposé au-dessus du tambour de ceinture (2) et du tambour de fabrication de pneumatiques (1).

17. Machine de fabrication de pneumatiques selon l'une des revendications 1 à 16, **caractérisée en ce que** le dispositif de pression (10) est équipé avec de nombreux de segments à griffe (44) en forme de coquilles, disposés à la périphérie.

18. Machine de fabrication de pneumatiques selon la revendication 17, **caractérisée en ce que** les segments à griffe en forme de coquilles (44) sont disposés entre les deux unités de pression (11, 12).

19. Procédé pour l'exploitation d'une machine de fabrication de pneumatiques avec anneau de transfert (13) et deux unités de pression (10, 11) dans le cadre duquel, lors d'un positionnement desdites unités de pression (10, 11), un mouvement couplé mécaniquement des unités de pression (10, 11) est exécuté, et dans le cadre duquel chacune des unités de pression (11, 12) est pourvue de segments de pression mobiles dans le sens radial, **caractérisé en ce que** le positionnement des segments de pression (28) est exécuté, au moins temporairement, indépendamment du positionnement des unités de pression (10, 11), relativement à l'anneau de transfert (13), **en ce que** le positionnement des segments de pression (28) est exécuté en couplage forcé mécaniquement et **en ce qu'**un apport de forces, répartie dans l'espace, est assuré sur une périphérie de l'anneau de transfert (13), par l'intermédiaire de plusieurs tiges filetées (15, 16, 17).
